# EUROPEAN PATENT APPLICATION

(11) **EP 3 348 323 A1**
(43) Date of publication of application: **18.07.2018**
(21) Application number: 16844097.2
(22) Date of filing: 05.08.2016
(51) Int. Cl.: B01D 71/68, B01D 69/08, B01D 71/44, C08J 9/28, C08K 5/103, C08L 39/06, C08L 81/06, H01M 8/04

(54) **FILM-FORMING STOCK SOLUTION FOR USE IN NON-SOLVENT-INDUCED PHASE SEPARATION METHODS, AND METHOD FOR PRODUCING POROUS HOLLOW FIBER MEMBRANE USING SAME**

(30) Priority: 07.09.2015 JP 2015175353
(71) Applicant: NOK Corporation, Tokyo 105-8585 (JP)
(72) Inventor: SATO Takatoshi, Kikugawa-shi Shizuoka 437-1507 (JP); WATANABE Kensuke, Kikugawa-shi Shizuoka 437-1507 (JP)
(74) Representative: Adam, Holger
(86) International application number: PCT/JP2016/073134
(87) International publication number: WO 2017/043233

(57) **Abstract**

A membrane-forming dope for non-solvent induced phase separation methods, the membrane-forming dope comprising 15 to 40 wt.% of polysulfone-based resin, 5 to 60 wt.% of polyvinylpyrrolidone, and 0.1 to 10 wt.% of polyoxyethylene sorbitan fatty acid ester, all of which are dissolved in a water-soluble organic solvent solution. A porous hollow fiber membrane is produced by spinning the membrane-forming dope by a non-solvent induced phase separation method using an aqueous liquid as a core liquid. The obtained high-performance porous hollow fiber membrane can be used as a water vapor permeable membrane used in fuel cells, because its water vapor permeability is not significantly reduced even after use in a high temperature environment such as, for example, 100 to 120°C.

## Description

### TECHNICAL FIELD

The present invention relates to a membrane-forming dope for non-solvent induced phase separation methods, and a method for producing a porous hollow fiber membrane using the same. More particularly, the present invention relates to a membrane-forming dope for non-solvent induced phase separation methods, the membrane-forming dope being used in the production of porous hollow fiber membranes used as water vapor permeable membranes, such as humidifying membranes for fuel cells; and also relates to a method for producing a porous hollow fiber membrane using the membrane-forming dope.

### BACKGROUND ART

Porous hollow fiber membranes have pores of a size that enables gas separation, and exhibit excellent gas separation properties among various inorganic membranes. They can be used in an environment in which heat resistance and chemical resistance are required. For these reasons, their applications have recently been spreading to water vapor permeable membranes, etc.; that is, porous hollow fiber membranes are used to humidify diaphragms of fuel cell stacks.

As a water vapor permeable membrane for humidifying diaphragms of fuel cell stacks, a hollow fiber membrane produced from a spinning dope comprising a water-soluble organic solvent solution of a polyphenylsulfone resin and hydrophilic polyvinylpyrrolidone is proposed, as disclosed, for example, in Patent Document 1. This hollow fiber membrane does not undergo a significant reduction in the degree of elongation even after dipping in warm water at 95°C for 280 hours, and thus has excellent membrane strength and durability.

Here, since fuel cells generally tend to have higher efficiency at a higher temperature, the maintenance of their performance in a high temperature environment such as 100 to 120°C is required. Therefore, water vapor permeable membranes incorporated in fuel cell systems are required to exhibit their performance under such temperature conditions.

However, conventionally proposed water vapor permeable membranes have a tendency that the performance as water vapor permeable membranes is lowered in an environment exposed to high temperature water vapor of 120°C as the use thereof is advanced. This tendency is considered to be attributable to, for example, a reduction in the hydrophilicity of polyvinylpyrrolidone, which is used as one component of the membrane-forming dope, in a high temperature environment. Therefore, further improvements are desired to be able to maintain performance even after continuous use in a high temperature environment.

### PRIOR ART DOCUMENT

### PATENT DOCUMENT

Patent Document 1 : JP-B-4100215
Patent Document 2 : JP-A-2005-193194
Patent Document 3 : JP-A-2012-143749
Patent Document 4 : JP-A-2005-270707

### OUTLINE OF THE INVENTION

### PROBLEM TO BE SOLVED BY THE INVENTION

An object of the present invention is to provide a membrane-forming dope for non-solvent induced phase separation methods, the membrane-forming dope being used in the production of high-performance porous hollow fiber membranes that do not undergo a significant reduction in their water vapor permeability even after use in a high temperature environment such as, for example, 100 to 120°C; and also to provide a water vapor permeable membrane using the membrane-forming dope.

### MEANS FOR SOLVING THE PROBLEM

The above object of the present invention can be achieved by a membrane-forming dope for non-solvent induced phase separation methods, the membrane-forming dope comprising 15 to 40 wt.% of polysulfone-based resin, 5 to 60 wt.% of polyvinylpyrrolidone, and 0.1 to 10 wt.% of polyoxyethylene sorbitan fatty acid ester, all of which are dissolved in a water-soluble organic solvent solution;
and by producing a porous hollow fiber membrane by spinning the membrane-forming dope by a non-solvent induced phase separation method using an aqueous liquid as a core liquid.

### EFFECT OF THE INVENTION

The porous hollow fiber membrane produced using the membrane-forming dope according to the present invention can maintain a high level of hydrophilicity in the pores of the membrane even in a high temperature environment. Therefore, the porous hollow fiber membrane exhibits an excellent effect that the reduction in performance as a water vapor permeable membrane is small even after use in a high temperature environment such as 120°C.

### EMBODIMENTS FOR CARRYING OUT THE INVENTION

Examples of the polysulfone-based resin include polysulfone resins, polyphenylsulfone resins, polyethersulfone resins, polyarylethersulfone resins, bisphenol A type polysulfone resins, and the like. Polyphenylsulfone resins are preferably used.

Polyphenylsulfone resins refer to those having a phenylsulfone group and an ether bond in the main chain, and having a repeating unit represented by the following formula: 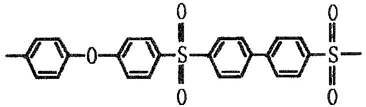 that is, those having biphenylene group and no isopropylidene group. In practice, commercial products, such as RADEL R series (produced by Amoco), can be used as they are.

Usable examples of polyethersulfone resins include commercial products, such as Redel series (produced by Solvay Advanced Polymers), Ultrason series (produced by BASF), and Sumikaexcel PES series (produced by Sumitomo Chemical Co., Ltd.).

Such a polysulfone-based resin is used at a concentration accounting for about 15 to 40 wt.%, preferably about 15 to 30 wt.%, of the membrane-forming dope. If the concentration of the polysulfone-based resin is higher than this range, the viscosity of the membrane-forming dope extremely increases to reduce spinning operability, and the membrane density is overly high to reduce water vapor permeability. In contrast, if the concentration of the polysulfone-based resin is lower than this range, the strength of the membrane decreases so that the membrane is not durable for practical use, and the pore size of the membrane is overly large so that gas other than water vapor passes through the membrane. Thus, there is a possibility that the performance as a water vapor permeable membrane cannot be exhibited.

The membrane-forming dope comprising a polysulfone-based resin as a membrane-forming component is prepared by adding hydrophilic polyvinylpyrrolidone, a polyoxyethylene sorbitan fatty acid ester, and a water-soluble organic solvent to the polysulfone-based resin.

As the polyvinylpyrrolidone added as a hydrophilic polymer material, one having a molecular weight of about 1000 (K-15) to 1200000 (K-90), preferably about 10000 (K-30) to 1200000 (K-90), is used at a concentration accounting for about 5 to 60 wt.%, preferably about 15 to 40 wt.%, of the membrane-forming dope. If the concentration of the hydrophilic polymer material is higher than this range, the viscosity of the membrane-forming dope extremely increases to reduce operability.

The addition of polyvinylpyrrolidone at the above ratio has some influence on structure control, such as the surface pore diameter of the porous membrane; however, it achieves the effect of reducing the air permeation rate of the porous membrane, that is, improving the gas barrier properties and increasing the water vapor permeation rate.

Examples of polyoxyethylene sorbitan fatty acid esters include polyoxyethylene sorbitan monolaurate, polyoxyethylene sorbitan monopalmitate, polyoxyethylene sorbitan monostearate, polyoxyethylene sorbitan monooleate, and the like; preferably highly hydrophilic polyoxyethylene sorbitan monolaurate. The polyoxyethylene sorbitan fatty acid ester is used at a concentration accounting for about 0.1 to 10 wt.%, preferably about 0.5 to 5 wt.%, of the membrane-forming dope. If the ratio of the polyoxyethylene sorbitan fatty acid ester is lower than this range, the performance as a water vapor permeable membrane is significantly reduced when the water vapor permeable membrane is used in a high temperature environment. In contrast, if the ratio of the polyoxyethylene sorbitan fatty acid ester is higher than this range, the phase condition of the membrane-forming dope is unstable, the size and performance of the membrane are not stable, and spinning operability is reduced.

Patent Document 2 discloses a polyphenylsulfone porous membrane formed by heat induction phase separation of polyphenylsulfone and a solvent. Patent Document 2 also discloses an embodiment in which inorganic particles and a polyoxyethylene sorbitan fatty acid ester as an aggregating agent are used, and indicates that the aggregating agent is used to control the aggregation state of the inorganic particles and to stabilize the molten state of the entire system.

Patent Document 3 discloses a separation membrane excellent in water permeability, separation property, and low fouling property formed by an efficient membrane cleaning method that uses a reduced amount of cleaning liquid. Patent Document 3 also discloses an embodiment in which a polyoxyethylene sorbitan fatty acid ester is used as a pore-opening agent, and indicates that surfactants used as the pore-opening agent have the characteristic of remaining in the porous layer and not undergoing a reduction in water permeability and blocking properties even after drying. A similar disclosure is also found in Patent Document 4.

None of Patent Documents 2 to 4 teach or suggest the effects of the present invention, that is, water vapor permeability is not significantly reduced even after use in a high temperature environment such as 100 to 120°C.

As the water soluble organic solvent, methanol, ethanol, tetrahydrofuran, or an aprotic polar solvent, such as dimethylformamide, dimethylacetamide and N-methyl-2-pyrrolidone, is used; dimethylacetamide or N-methyl-2-pyrrolidone is preferably used.

In the non-solvent induced phase separation method, a homogeneous polymer solution that does not contain inorganic particles and comprises a polymer and a solvent induces a phase separation due to concentration changes caused by the penetration of the non-solvent and the evaporation of the solvent into the external atmosphere, and a non-solvent induced phase separation is induced in a coagulation bath, thereby producing a separation membrane. Specifically, a dry-wet spinning method or a wet spinning method is used.

Dry-wet spinning using such a membrane-forming dope is performed by using an aqueous liquid, generally water, as a core liquid, and a porous hollow fiber membrane coagulated in water or an aqueous coagulation solution is washed with water and then dried. Water washing is performed, for example, using room temperature water or warm water, or by an autoclave using pressurized water (e.g., 121°C).

### EXAMPLES

The following describes the present invention with reference to Examples.

### Example

A membrane-forming dope being homogeneous at room temperature was prepared. The membrane-forming dope comprised 20 parts by weight of polyphenylsulfone resin (RADEL R-5000, produced by Solvay Specialty Polymers), 15 parts by weight of polyvinylpyrrolidone (K-30, produced by Junsei Chemical Co. Ltd.), 1 part by weight of polyoxyethylene sorbitan monolaurate (Tween 20, produced by Kanto Chemical Co., Ltd.), and 64 parts by weight of dimethylacetamide.

Dry-wet spinning was performed by extruding the prepared membrane-forming dope into a water coagulation bath using a spinning nozzle having a double circular structure and using water as a core liquid. Then, washing was carried out in pressurized water at 121°C for 1 hour, followed by drying in an oven at 60°C, thereby obtaining a porous polyphenylsulfone resin hollow fiber membrane having an outer diameter of 1,000 µm and an inner diameter of 700 µm.

The obtained porous polyphenylsulfone resin hollow fiber membrane was measured for water vapor permeation rate, pure water permeation rate, and air permeation rate.

Water vapor permeation rate: A both end-opened type hollow fiber membrane module was produced by using 3 hollow fiber membranes having an effective length of 17 cm. Humidified air at an RH of 90% was supplied from the outside of the membrane, and dry air was supplied in the inside of the membrane. The amount of water vapor permeation per time was measured, and converted into the amount of air permeation per unit membrane area, unit time, water vapor partial pressure difference between the outside and inside of the membrane, and 1 MPa.

Pure water permeation rate: Using a both end-opened type hollow fiber membrane module having an effective length of 15 cm, pure water was used as raw water and filtered from the inside of the hollow fiber membrane to the outside (internal pressure filtration) under conditions in which the temperature was 25°C and the pressure was 1 MPa. The amount of water permeation per time was measured, and converted into the amount of water permeation per unit membrane area, unit time, and 1 MPa.

Air permeation rate: Using a module prepared by forming a hollow fiber membrane having an effective length of 15 cm into a loop shape, and fixing the both ends of the loop to a glass tube, air at a temperature of 25°C and a pressure of 50 kPa was applied from the inside of the membrane to the outside. The amount of air permeation per time was measured, and converted into the amount of air permeation per unit membrane area, unit time, and 1 MPa.

### Comparative Example 1

In the Example, polyoxyethylene sorbitan monolaurate was not used, and the amount of dimethylacetamide was changed to 65 parts by weight.

### Comparative Example 2

In the Example, polyvinylpyrrolidone was not used, the amount of polyoxyethylene sorbitan monolaurate was changed to 15 parts by weight, and the amount of dimethylacetamide was changed to 65 parts by weight, respectively.

Table below shows the results obtained in the above Example and Comparative Examples.

**Table**

| Measurement item | Example | Comp. Ex. 1 | Comp. Ex. 2 |
|---|---|---|---|
| Water vapor permeation rate (g/cm²/minute/MPa) | | | |
| After membrane formation (90°C) | 0.282 | 0.280 | 0.290 |
| After retention at 120°C for 50 hours | 0.273 | 0.241 | 0.260 |
| Performance reduction rate (%) | 3 | 14 | 10 |
| Pure water permeation rate (ml/cm²/hour/MPa) | 0.0 | 0.0 | 0.0 |
| Air permeation rate (ml/cm²/ minute /MPa) | 0.0 | 0.0 | 0.0 |

### INDUSTRIAL APPLICABILITY

The porous hollow fiber membrane according to the present invention can be effectively used as a water vapor permeable membrane used in fuel cells, or the like, because its water vapor permeability is not significantly reduced even after use in a high temperature environment such as 100 to 120°C.

## Claims

1. A membrane-forming dope for non-solvent induced phase separation methods, the membrane-forming dope comprising 15 to 40 wt.% of polysulfone-based resin, 5 to 60 wt.% of polyvinylpyrrolidone, and 0.1 to 10 wt.% of polyoxyethylene sorbitan fatty acid ester, all of which are dissolved in a water-soluble organic solvent solution.

2. The membrane-forming dope for non-solvent induced phase separation methods according to claim 1, wherein the polysulfone-based resin is polyphenylsulfone resin.

3. The membrane-forming dope for non-solvent induced phase separation methods according to claim 1, wherein the polyoxyethylene sorbitan fatty acid ester is polyoxyethylene sorbitan monolaurate.

4. The membrane-forming dope for non-solvent induced phase separation methods according to claim 1 or 3, wherein the polyoxyethylene sorbitan fatty acid ester is used 0.5 to 5 wt.%.

5. The membrane-forming dope for non-solvent induced phase separation methods according to claim 1, 2, or 3, wherein the membrane-forming dope is free from inorganic particles.

6. A method for producing a porous hollow fiber membrane, the method comprising spinning the membrane-forming dope for non-solvent induced phase separation methods according to claim 1, 2, or 3 by a non-solvent induced phase separation method using a double circular nozzle and using an aqueous liquid as a core liquid.

7. A water vapor permeable membrane, which is produced by the method for producing according to claim 6.

8. The water vapor permeable membrane according to claim 7, which is used as humidifying membranes for fuel cells.

9. The water vapor permeable membrane according to claim 8, which is used in a high temperature environment of 100 to 120°C.

## Amended claims

### Amended claims under Art. 19.1 PCT

1. (Amended) A membrane-forming dope for non-solvent induced phase separation methods, the membrane-forming dope comprising 15 to 30 wt.% of polyphenylsulfone resin, 15 to 40 wt.% of polyvinylpyrrolidone, and 0.5 to 5 wt.% of polyoxyethylene sorbitan fatty acid ester, all of which are dissolved in a water-soluble organic solvent solution.

2. (Deleted)

3. The membrane-forming dope for non-solvent induced phase separation methods according to claim 1, wherein the polyoxyethylene sorbitan fatty acid ester is polyoxyethylene sorbitan monolaurate.

4. (Deleted)

5. (Amended) The membrane-forming dope for non-solvent induced phase separation methods according to claim 1 or 3, wherein the membrane-forming dope is free from inorganic particles.

6. (Amended) A method for producing a porous hollow fiber membrane, the method comprising spinning the membrane-forming dope for non-solvent induced phase separation methods according to claim 1 or 3 by a non-solvent induced phase separation method using a double circular nozzle and using an aqueous liquid as a core liquid.

7. A water vapor permeable membrane, which is produced by the method for producing according to claim 6.

8. The water vapor permeable membrane according to claim 7, which is used as humidifying membranes for fuel cells.

9. The water vapor permeable membrane according to claim 8, which is used in a high temperature environment of 100 to 120°C.

Statement under Art. 19.1 PCT
1. was amended to limit it to the preferable ranges disclosed in paragraphs [0010], [0013], [0015], and [0017]. In accordance with this amendment, claims 2 and 4 were cancelled.
 In the amended claim 1, 15 to 40 parts by weight of PVP is used with respect to 15 to 30 parts by weight of PPS, and, therefore, 50 parts by weight or more of PVP is used based on 100 parts by weight of PPS. These ranges are completely far away from the ratio of the added PVP (5 to 30 parts by weight) in Document 2, which is cited in the International Search Report. In the Example of the present application, in which a membrane-forming dope prepared by further adding 1 part by weight of polyoxyethylene sorbitan monolaurate to Comparative Example 2 of Document 2 (corresponding to Comparative Example 1 of the present application; PPS: 20 parts by weight, PVP: 15 parts by weight) is used, it is shown in the table that the water vapor permeation rate and its performance reduction rate after retention at 120°C for 50 hours are excellent. Therefore, it can be said that the inventive step of the present invention after amendment is no longer denied by the combination of Documents 1 and 2.
